Europäisches Patentamt

European Patent Office

Office européen des brevets

(19)

(11) EP 1 172 686 A2

(12) # EUROPEAN PATENT APPLICATION

(43) Date of publication:
16.01.2002 Bulletin 2002/03

(51) Int Cl.7: G02F 1/29, G02B 5/18

(21) Application number: 01302753.7

(22) Date of filing: 26.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 03.07.2000 US 216156 P

(71) Applicant: CreoScitex Corporation Ltd.
Herzlia 46103 (IL)

(72) Inventors:
• Gelbart, Daniel
Vancouver, BC V5G-4M1 (CA)
• Pilossof, Nissim
Rehovot 76485 (IL)

(74) Representative: Freed, Arthur Woolf et al
Edward Evans Barker Clifford's Inn Fetter Lane
London EC4A 1BZ (GB)

(54) **Controllable diffractive grating array with perpendicular diffraction**

(57)   A linear light valve array including individually addressable diffractive optical elements, the diffractive optical elements having planes of diffraction substantially perpendicular to the longitudinal axis of the array.
   A method of light modulation, including the steps of: providing a linear light valve array including individually addressable diffractive optical elements, the elements having planes of diffraction substantially perpendicular to the longitudinal axis of the array, illuminating the light valve with a light beam, and selectively activating the optical elements.

Fig. 2a

EP 1 172 686 A2

## Description

FIELD OF THE INVENTION

The present invention relates generally to light valve arrays and more particularly to linear Light Valve Array (LVA), in which individual members (pixels) are of controllable (switchable) diffraction grating type.

BACKGROUND OF THE INVENTION

Various optical applications such as projection and imaging require light modulation and/or light beam steering. In order to increase the imaging speed, individual optical modulators are usually combined, to form one or two-dimensional arrays, called Spatial Light Modulators (SLM) or Light Valve Arrays (LVA). A distinctive class LVA is operative in a diffractive mode, i.e. an activated LVA member of the array diffracts the incoming light beam at a discrete multitude of angles, those angles being a function of the light wavelength and the dimensions of the member. Such LVAs can be based either on Liquid Crystal technology (for example, as described in US Patents Nos. 3,843,231 to Borel et al.; 4,639,091 to Huignard et al.; 4,937,593 to Prats; 5,148,302 to Nagano et al.; 5,151,814 to Grinberg et al.; and 5,638,201 to Bos et al.), or on Micro Electro-Mechanical Systems (MEMS) technology (for example, as described in US Patents Nos. 5,311,360; 5,459,610; 5,677,783; 5,808,797; 5,841,579; 5,982,553 to Bloom et al.; 5,629,801 to Staker et al.; 5,661,592 to Bronstein et al.; 5,920,518 to Harrison et al.; 5,949,570 to Shiono et al.; 5,999,319 to Castracane; and 6,014,257; and 6,031,652 to Furlani et al.).

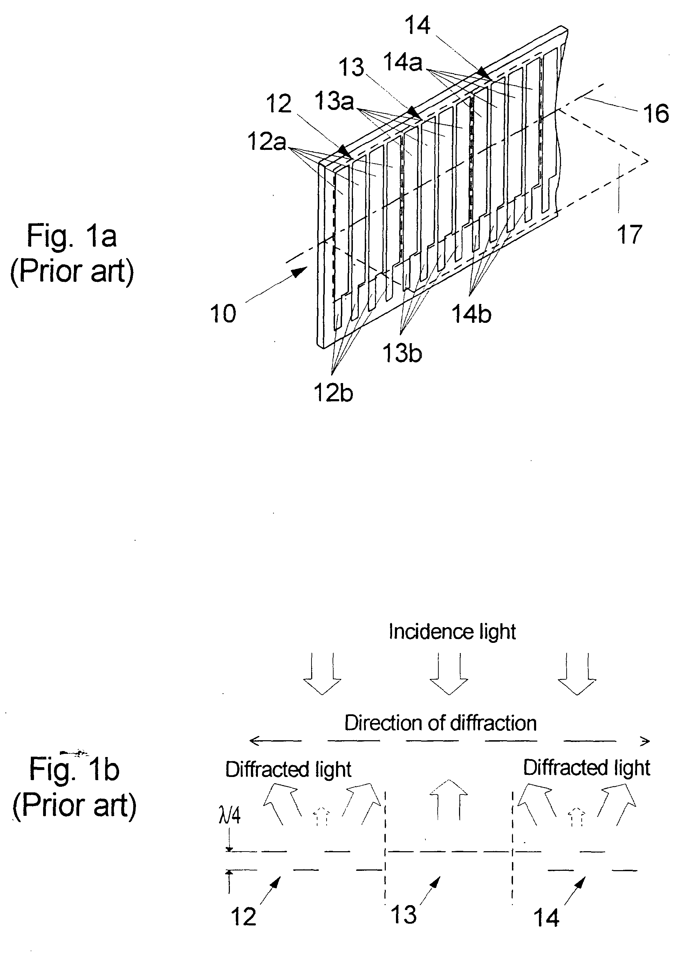

Optical techniques for imaging using diffractive LVAs are well known in the art. For better demonstration of the present invention, an LVA and a typical optical system employing it are illustrated in Figs. 1a to 1c.

Fig. 1a is a partial isometric view of a controllable diffractive grating array, generally denoted by numeral 10. Each LVA diffractive member (12, 13, and 14) is constructed of four (in this example) sub-elements 12a, 13a and 14a, respectively, which introduce, when activated, different light-path length in the incoming beam, i.e. the LVA of Fig. 1a is an example of a phase grating type LVA. The diffraction plane 17 is parallel to the array's long axis 16 and is common to all the LVA members 12, 13 and 14.

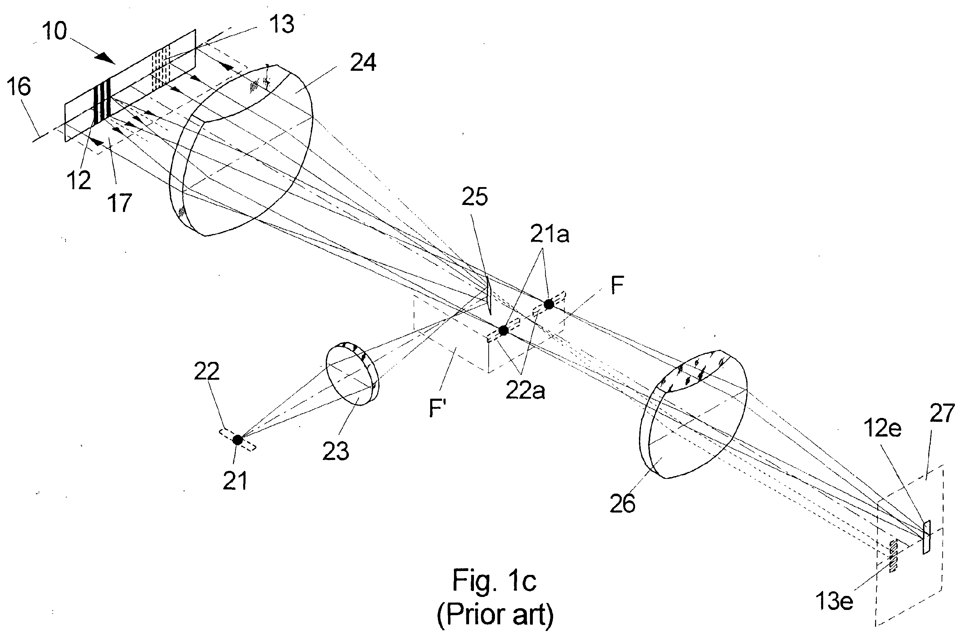

Fig. 1b illustrates the diffraction in "piston" type active members of an LVA. When an array member is activated (for example members 12 and 14), its sub-elements (12a and 14a, respectively) introduce a difference in the phase of the reflected light. For piston type grating, the optimal phase difference is $\lambda/2$ ($\lambda/4$ in both directions for reflective grating). Due to this phase modulation, the light is diffracted in the directions shown by the solid-line arrows. Array member 13 is non-active and all its sub-elements 13a return the light without modulating its phase, i.e. the member acts merely as a plane mirror. The diffracted beams from all LVA members lie in the same common diffraction plane 17 of Fig. 1a, i.e. the diffractive planes for all members of the array coincide. This fact causes significant shortcomings which are explained below with reference to Fig. 1c.

Fig. 1c schematically illustrates a typical optical system employing a diffractive LVA. Optical light source 21 is projected on the LVA 10, after passing through condenser lens 23 and folding mirror 25. Active (12) and non-active (13) LVA members are shown. The diffraction plane 17 is common for all the LVA members and is parallel to the array's long axis. Fourier lens 24 images the focus of the condenser lens 23, lying in the plane F', onto the Fourier plane F. Thus, the active members 12 produce an image 12e (for simplicity only the +1st and -1st diffractive orders are illustrated, higher diffractive orders are not illustrated) of the light source 21. The non-active members 13 act as plane mirrors and merely return the light to the folding mirror 25. Thus, in this setup, the folding mirror 25 acts also as a spatial Fourier filter, preventing the "0" order diffracted light to propagate in the direction of the image plane 27. Consequently, the imaging lens 26 images the LVA 10 onto the image plane 27. Thus, due to the spatial filtration, the image of the LVA 10 in the plane 27 is an array of bright (12e) and dark (13e) spots, the first being the images of the corresponding active members 12 and the second being the images of the corresponding non-active members 13.

The optical configuration of Fig. 1c is well known in the art and is the basis of many spectrometers. In such configurations, high efficiency and good spatial filtration (contrast ratio) can be easily achieved for small (point-like) light sources. However, in case of elongated light sources (22, dashed line), such as laser-diode bar arrays, having a typical length of 10 mm, the Fourier images which are co-axial (22a, dashed line) can partially overlap, leading to increased dimensions of the spatial filter 25 and hence significant vignetting of the optical beams. In such conventional art configurations, a compromise between high efficiency and high contrast has usually to be made.

SUMMARY OF THE INVENTION

The present invention relates to linear Light Valve Array in which individual members (pixels) are of controllable (switchable) diffraction grating type.

In accordance with the present invention, a system and method are provided, in which the linear LVA is designed such that the diffractive planes of the LVA members of the array do not coincide and are substantially perpendicular to the array's long axis. The LVA members can be of piston type, cantilever mirror type, step-wise blazed type or any other diffractive element including but not limited to diffractive optical elements with controllable refractive index.

According to another embodiment of the present invention, a microlens array is attached to the linear LVA, increasing the overall efficiency by preventing non-diffractive parts of the LVA to reflect (in case of reflective device) or transmit (in case of transmittive device) the incident light.

## BRIEF DESCRIPTION OF THE DRAWINGS

Fig. 1a is an isometric view of a conventional art LVA of diffractive type;

Fig. 1b illustrates the performance of a conventional art diffractive LVA of "piston" type;

Fig. 1c is a schematic illustration of a conventional art optical system employing diffractive type LVA ;

Fig. 2a is an isometric view of a diffractive type LVA having LVA members of 'piston' type, constructed according to an embodiment of the present invention;

Figs. 2b and 2c are schematic illustrations of the diffraction performance of a 'piston' type LVA member, in the LVA of Fig. 2a, constructed according to an embodiment of the present invention;

Fig. 3 is a schematic isometric view of an optical system employing LVA of diffractive type, constructed according to an embodiment of the present invention;

Fig. 4a is an isometric view of an LVA of diffractive type having LVA members of 'cantilever mirror' type, constructed according to an embodiment of the present invention;

Figs. 4b and 4c are schematic illustrations of the diffraction performance of a 'cantilever mirror' type LVA member, in the LVA of Fig.4a, constructed according to an embodiment of the present invention;

Figs. 5a and 5b are schematic illustrations of the diffraction performance of a 'step-wise blazed' type LVA member, in an LVA constructed according to an embodiment of the present invention;

Fig. 6a is a schematic isometric view of an LVA of diffractive type having increased aperture ratio and constructed according to an embodiment of the present invention; and

Figs. 6b and 6c are schematic illustrations of the performance of the LVA of Fig. 6a, constructed according to an embodiment of the present invention.

## DETAILED DESCRIPTION OF THE INVENTION

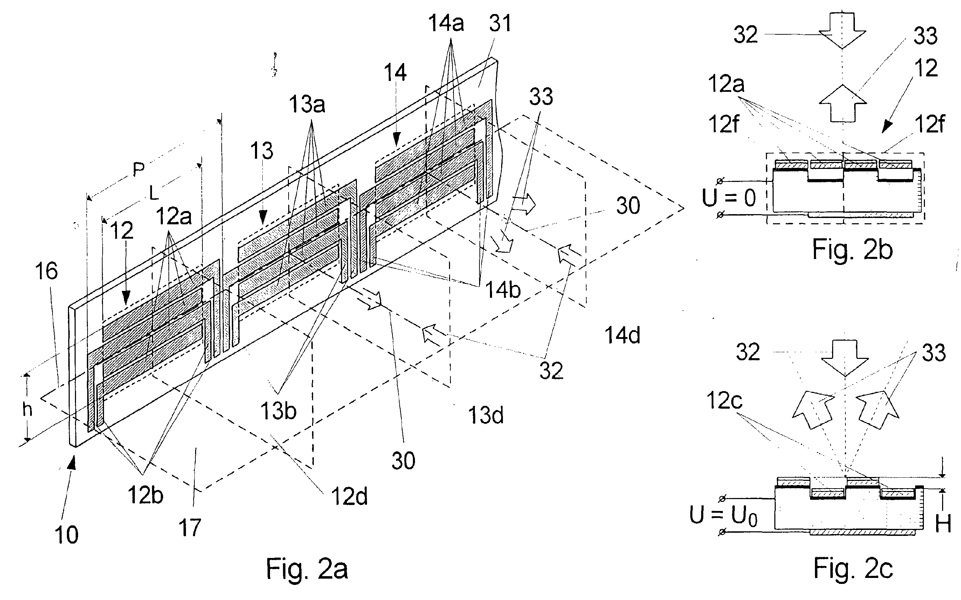

Reference is now made to Fig. 2a, which is a schematic illustration of a diffractive type linear array LVA 10 of reflective type, employing individual 'piston' type diffractive members 12, 13, 14, whose diffraction planes 12d, 13d, 14d, respectively, are perpendicular or nearly perpendicular to the array's long axis 16. This configuration is achieved by defining the dimension L (the length of the diffractive member) to be much longer than the dimension h (the height of the diffractive member) (L>>h). When activated, the electrodes 12a, 13a, 14a, cause periodical change in the mechanical and/or optical parameters of the active media (MEMS structure, LC, etc.), in a direction perpendicular to the array's long axis 16. Because of the configuration L>>h, the diffraction in plane 17 is much less than the diffraction in the planes 12d, 13d, 14d.

In the illustrated example of Fig 2a, a light beam 32 propagating along axis 30, which is perpendicular to the LVA's plane 31, may be either reflected back in the same direction by a non-active member (in this example 13), or diffracted by an active member (in this example 14) in directions 33, lying in diffraction plane 14d, normal to the LVA's plane 31.

For completeness of the explanation, Figs. 2b and 2c are provided, illustrating the diffractive performance of MEMS LVA member of 'piston' type. Both Figs. are cross-sectional illustrations of plane 12d of an LVA member 12, which is perpendicular to the array's long axis 16. In this example, the LVA member (or its sub-elements respectively) is electrically activated. In Fig. 2b the applied voltage is U=0 and all strips (sub-elements) 12a forming the member lie in the same plane, i.e. the member acts as planar mirror and the impinged beam 32 is reflected back in direction 33. In Fig. 2c voltage of value $U=U_0$ is applied on strips 12c. Due to the electrostatic force, strips 12c are deformed downward and the impinging light beam 32 is diffracted in directions 33. Maximum performance of this type diffractive modulator can be achieved when the deformation of the strip 12c is $H=\lambda/4$, where $\lambda$ is the wavelength of the impinging light beam.

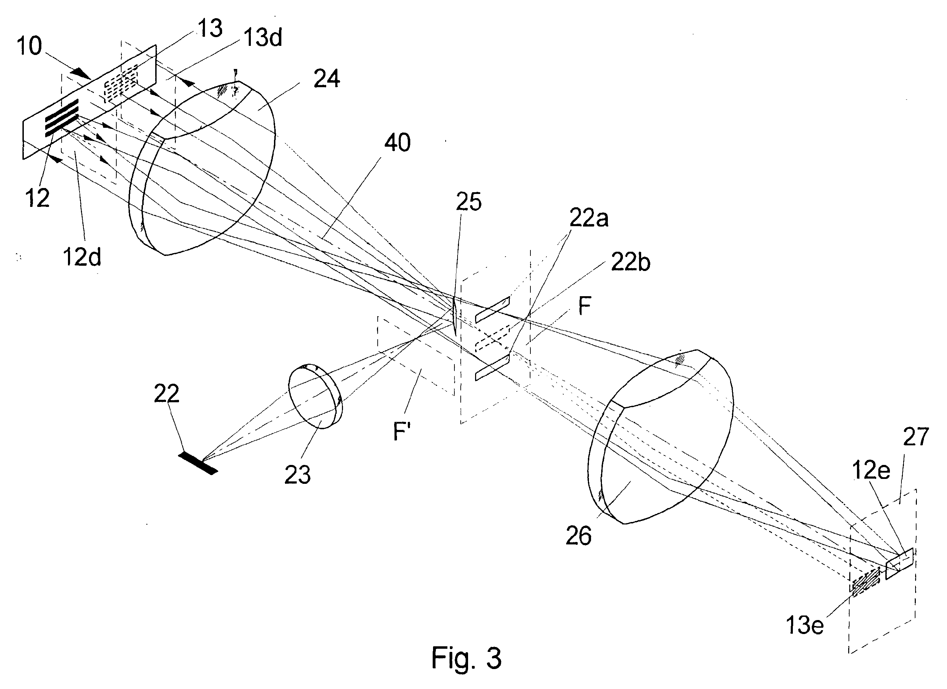

The advantage of employing the diffractive array illustrated in Fig. 2a when using elongated light sources is clearly demonstrated in Fig. 3. Fig. 3 is a schematic illustration of an optical system generally similar to the one illustrated in Fig. 1c. An elongated light source 22 with its long dimension parallel (in this example) to the optical axis 40, is focused by the condenser 23 on the plane F', then folded by the mirror 25 and projected as a parallel beam by the Fourier lens 24 on the reflective diffractive LVA 10. The conjugated planes for the Fourier lens 24 are F and F'. F is the Fourier plane of the system, where minimum two images of the light source are present, being the "+1" and "-1" diffractive orders caused by all active LVA members 12 of the array 10 (for clarity, higher orders are not illustrated). 22b denotes where the "0" diffractive order caused by active LVA members 12 and the mere reflection by non-active LVA members 13 would be present. However, the "0" order diffracted light and the mere reflected light are blocked by the folding mirror 25, which acts in this configuration also as a Fourier filter. Consequently, the LVA 10 is imaged by lens 26 on the image plane 27, where an array of bright spots 12e (being images of active LVA members 12) and dark spots 13e (being images of non-active LVA members 13) are present.

Fig. 3 clearly demonstrates that because of the perpendicular non-coinciding diffractive planes 12d, 13d (Fig. 2a), of the corresponding LVA members 12, 13, the Fourier images 22a and 22b are arranged in a vertical manner, with their long dimensions not co-axial, and do not lie in the plane defined by the source 22 and the optical axis 40. In this way, the overlapping of diffractive orders and beam vignetting is avoided. It is appreciated that in the exemplary configuration of LVA member illustrated above, the height of the LVA member h (Fig. 2a) is much smaller than its active length L, and hence the diffraction in the direction of the LVA long axis 16 is negligible.

It is also appreciated that other than 'piston' type individual diffractive optical elements can be arranged in array in the manner illustrated in Fig. 2a.

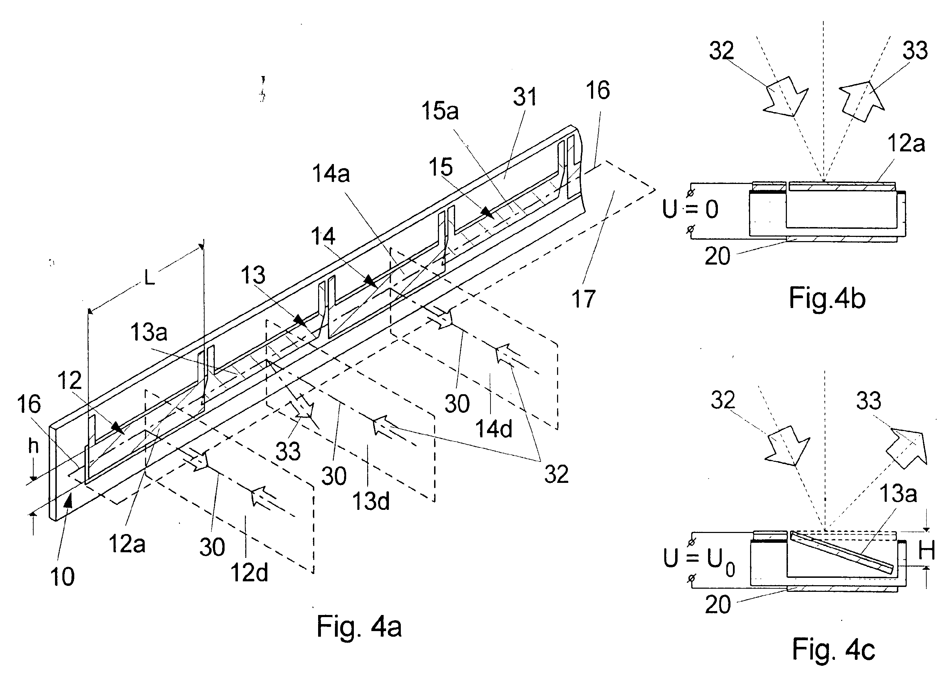

Fig. 4a is a schematic isometric view of a diffractive array with perpendicular diffraction, employing 'cantilever mirror' type LVA members 12, 13, 14, 15. Each member consists of a mirror 12a, 13a, 14a, 15a, having dimensions L x h. The dimensions L and h are chosen such that L>>h. Thus, the diffraction in plane 17 is negligible compared to the diffraction in the planes 12d, 13d, 14d. For completeness of the explanation, Figs. 4b and 4c are provided, illustrating the diffractive performance of a MEMS LVA member of 'cantilever mirror' type. Fig. 4b is a cross-sectional illustration of an inactive member (for example 12 or 14 of Fig. 4a) while Fig.4c is cross section of an active (diffracting) member (for example 13 or 15 of Fig. 4a). Both cross-sectional illustrations are in planes perpendicular to the array's long axis 16 (12d, 13d, 14d). In this example the LVA members are electrically activated. The mirrors 12a and 13a are also electrodes and are suspended over the counter electrode 20. In Fig. 4b the applied voltage is U=0. The mirror 12a is horizontal and the member acts as a planar mirror, i.e. the angle of incidence of the impinging beam 32 and the angle of reflection of reflected beam 33 are equal with respect to the normal to the LVA plane. In Fig. 4c a voltage of value $U=U_0$ is applied to mirror 13c. Due to electrostatic force, the mirror is deformed downward and the impinging light beam 32 is diffracted in direction 33.

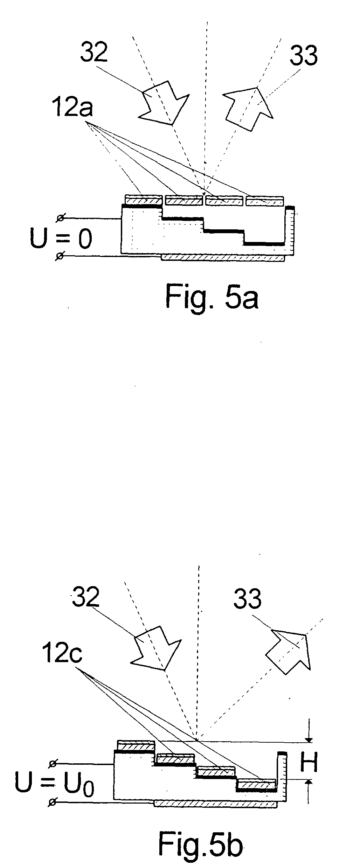

A method of simulating cantilever mirror by a number of vertically deformed reflective strips is illustrated in Figs. 5a and 5b, demonstrating the diffractive performance of a diffractive optical element of 'staircase blazed' type. The LVA is arranged as shown in Fig. 2a, but the strips are deformed downward in a manner forming a staircase, rather than switched alternatively as shown in Figs. 2b and 2c. The advantages of using this type of diffractive optical elements are discussed in Provisional US Patent application no. 60/218,063, assigned to the same assignee as this patent application.

It is well known to the skilled in the art that the angular resolution of a diffractive optical element, strongly depends on the number of the sub-elements working in synchrony it consists of. Therefore, it is appreciated that in this explanation, diffractive member or diffractive optical element means an entity imaged as such on the imaging surface and producing on this surface bright or dark spots, depending on its diffractive state, and not the individual sub-elements it may or may not consist of. In the example of Figs. 2a to 2c each LVA member 12, 13, consists of two sub-members 12f (Fig. 2b), each one having two sub-elements 12a. The sub-members 12f are grouped functionally to form the diffractive member 12, in terms that they are always working in synchrony, thus combining their diffractive power to achieve higher angular resolution. Such a configuration can be introduced not only to diffractive LVA employing piston-type elements, but to diffractive LVAs based on any type of diffractive optical modulator, such as staircase blazed or cantilever mirror.

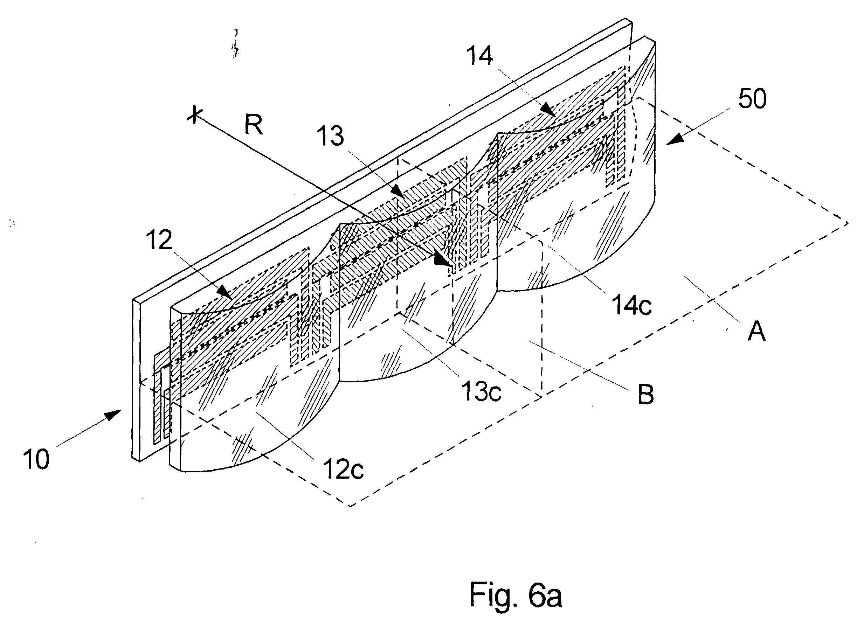

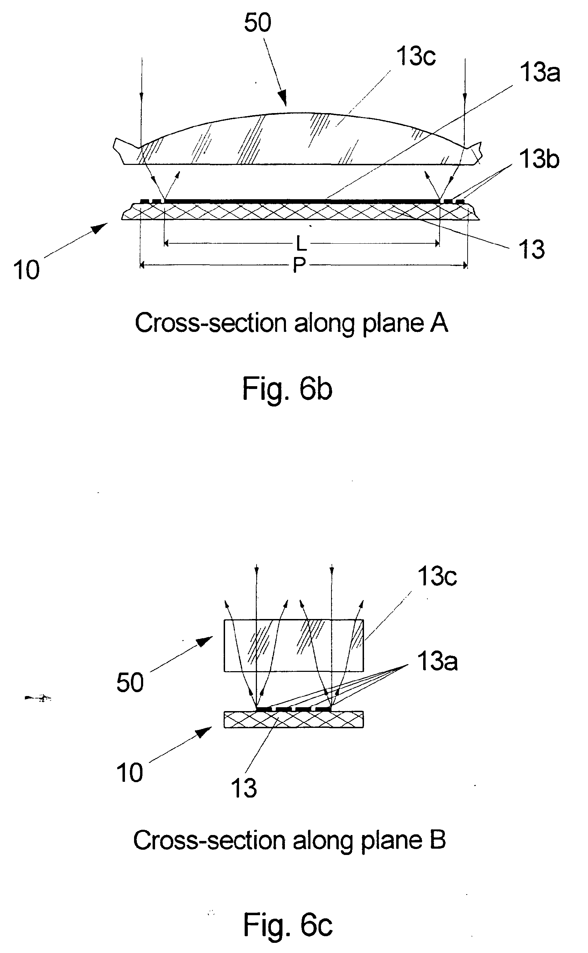

Fig. 6a illustrates another embodiment of the present invention, including a microlens array 50 attached to the LVA 10. An important parameter of an LVA of any type is the Aperture Ratio, defined as the ratio between the active aperture of the pixel and the total surface occupied by it, including the gap between adjacent pixels. As can be seen from the comparison between Fig. 1a and Fig. 3, it is an inherent property of LVAs with perpendicular diffraction to have lower aperture ratio, compared to LVAs with parallel diffraction. This is due to the way the member electrodes 12a, 13a, 14a, of Fig. 1a can be wired by the interconnections 12b, 13b, 14b. For the LVA of Fig. 2a, the Aperture Ratio is $\frac{L}{P}$, which decreases when increasing the number of the member electrodes 12a, 13a, 14a, i.e. when increasing the resolution power of the diffractive LVA members 12, 13, 14, respectively. In the embodiment of Fig. 6a, this drawback is avoided by attaching to the LVA 10 a microlens array 50. Each of the individual lenses 12c, 13c, 14c of the array 50 is associated with a single LVA member 12, 13, 14. The performance of the lens array can be better understood from Figs. 6b and 6c, where cross-sections along the planes A and B (of Fig. 6a) are illustrated, respectively. As can be seen in Fig. 6b, the parameters of the individual microlens 13c are chosen (in the context of the overall optical scheme) such that only the active part L of the LVA member is illuminated. Because of this, the aperture ratio is close to its theoretical maximum and is determined mainly by the gap between the electrodes 12a, 13a, 14a of the LVA members 12, 13, 14 respectively (Fig. 2a).

In the example of Fig. 6a, the shape of the lens is cylindrical and the radius R of the curved surface lies in the diffraction plane B. Therefore, as can be seen in Fig. 6c, lens 13c does not affect the diffraction properties of the LVA members 13. It is appreciated that other types of lenses, namely spherical or aspherical can be used and the choice of the shape and the microlens parameters will be made according the optical system in which the LVA is integrated.

It is appreciated that microlensing for increasing the LVA efficiency, as described above, can be applied on the designs of Figs. 4 and 5 as well.

It will be appreciated by persons skilled in the art that the present invention is not limited by what has been particularly shown and described herein above. Rather the scope of the invention is defined by the claims that follow:

## Claims

1. A linear light valve array comprising individually addressable diffractive optical elements, said diffractive optical elements having planes of diffraction substantially perpendicular to the longitudinal axis of said array.

2. The linear light valve array of claim 1, wherein said individually addressable diffractive optical elements are of 'piston' type.

3. The linear light valve array of claim 1, wherein said individually addressable diffractive optical elements are of 'cantilever mirror' type.

4. The linear light valve array of claim 1, wherein said individually addressable diffractive optical elements are of 'staircase blazed' type.

5. A method of light modulation, comprising the steps of:

   providing a linear light valve array comprising individually addressable diffractive optical elements, said elements having planes of diffraction substantially perpendicular to the longitudinal axis of said array;
   illuminating said light valve with a light beam; and
   selectively activating said optical elements.

6. The method of claim 5, wherein said individually addressable diffractive optical elements are of 'piston' type.

7. The method of claim 5, wherein said individually addressable diffractive optical elements are of 'cantilever mirror' type.

8. The method of claim 5, wherein said individually addressable diffractive optical elements are of 'staircase blazed' type.

Fig. 1a
(Prior art)

Fig. 1b
(Prior art)

Incidence light

Direction of diffraction

Diffracted light                          Diffracted light

$\lambda/4$

12                    13                    14

Fig. 1c
(Prior art)

EP 1 172 686 A2

Fig. 2a

Fig. 2b

Fig. 2c

EP 1 172 686 A2

Fig. 3

EP 1 172 686 A2

Fig. 4a

Fig.4b

Fig. 4c

EP 1 172 686 A2

32    33

12a

U = 0

Fig. 5a

32    33

12c

U = U$_0$

H

Fig.5b

Fig. 6a

EP 1 172 686 A2

50

13c

13a

13b

13

10

L

P

Cross-section along plane A

Fig. 6b

13c

50

13a

10

13

Cross-section along plane B

Fig. 6c